# FASCICULE DE BREVET EUROPEEN

(11) **EP 3 732 800 B1**
(45) Date de publication et mention de la délivrance du brevet: **02.04.2025**
(21) Numéro de dépôt: 18833079.9
(22) Date de dépôt: 28.12.2018
(51) Int. Cl.: H04B 7/185

(54) **PROCÉDÉ ET SYSTÈME POUR L'ACCROCHAGE D'UN TERMINAL DANS UN RÉSEAU SATELLITAIRE**
VERFAHREN UND SYSTEM ZUM EINFÜGEN EINES TERMINALS IN EIN SATELLITENNETZWERK
METHOD AND SYSTEM FOR INSERTING A TERMINAL INTO A SATELLITE NETWORK

(30) Priorité: 28.12.2017 FR 1701404
(43) Date de publication de la demande: 04.11.2020
(73) Titulaire: THALES, 92190 Meudon (FR)
(72) Inventeur: SOULIE, Antoine, 92622 Gennevilliers Cedex (FR); TOURET, Marc, 92622 Gennevilliers Cedex (FR); CHEVALLIER, Michel, 92622 Gennevilliers Cedex (FR)
(74) Mandataire: Atout PI Laplace
(86) Numéro de dépôt international: PCT/EP2018/097136
(87) Numéro de publication internationale: WO 2019/129885

(56) Documents cités:
- GB-A- 2 303 764
- JP-B2- 3 653 722
- US-B2- 9 800 324

## Description

L'invention concerne un procédé et un système permettant à un terminal de s'accrocher à un réseau satellitaire de communication et de se déplacer au sein de ce réseau sans connaître a priori la configuration des spots du satellite, ces derniers pouvant varier au cours d'une mission.

Elle s'applique dans des systèmes Satcom où le satellite est configuré pour former N spots orthogonaux sur la voie retour (terminal vers hub) et une agrégation de ces spots sur la voie aller (hub vers terminaux) et où les terminaux sont mobiles.

L'un des problèmes existants dans le domaine des Satcom est de permettre à un terminal de rentrer et de se déplacer dans un réseau Satcom sans connaissance a priori de la configuration des spots du satellite, car ils peuvent être reconfigurés en cours de mission.

Différentes solutions sont décrites dans l'art antérieur. Une première solution est connue sous l'expression « solution iDirect ». Le terminal qui souhaite entrer et se déplacer va détecter des spots adjacents en mettant en œuvre deux chaînes de réception. Cette première solution en mettant en œuvre deux chaînes de réception, augmente les coûts par un rapport de deux.

Une autre méthode est décrite dans la demande de brevet FR 3052012. La méthode « uplink handover » nécessite que le terminal ait la connaissance a priori de la configuration géométrique de chaque spot, des relations d'adjacence entre les spots et de la configuration des bandes utilisées pour recevoir dans chacun des spots. Ceci entraîne une planification initiale très importante et plus complexe.

Le brevet GB 2303764 décrit un procédé permettant de déterminer un faisceau étroit parmi une pluralité de faisceaux étroits projetés par un satellite dans lequel se trouve un émetteur-récepteur de fréquences radioélectriques, tous les faisceaux de la pluralité de faisceaux étroits pouvant recevoir une voie de signalisation commune.

Dans le brevet JP 3653722 un routeur IR est connecté à chaque VSAT.

Les solutions de l'art antérieur ne permettent pas de résoudre de manière souple et peu coûteuse le problème « d'entrée » d'un terminal dans un réseau satellitaire précité. Dans les techniques connues de l'art antérieur, on déplace la complexité de la mobilité soit dans la planification amont, soit dans la multiplication de la chaîne de réception. Si les spots deviennent de plus en plus petits, et donc de plus en plus nombreux sur une même zone, ces solutions ne sont pas souples, ni facilement modifiables, lorsqu'un opérateur change la configuration, ou le nombre et la largeur des bandes dans les différents spots. L'expression « SATVLAN » sera utilisée par la suite pour désigner les paramètres de bande et de largeur de bande utilisés dans un spot et éventuellement les paramètres de puissance.

L'objet de la présente invention est d'offrir un procédé et un système permettant de résoudre le problème de la localisation des terminaux dans les différents spots afin de permettre l'entrée, l'accrochage d'un terminal dans un réseau satellitaire, sans transférer la complexité à la planification initiale ni à la multiplication des chaînes de réception.

L'invention concerne un procédé pour configurer l'entrée d'au moins un terminal mobile A dans un réseau satellitaire comprenant un satellite émettant sur plusieurs spots, un hub comprenant un ensemble de hubs modems et au moins deux lois de saut de fréquence, le procédé comportant au moins les étapes suivantes :
- Lors d'un premier accès, synchroniser le terminal A sur une première loi de saut fréquence LS₁ et identifie la trame et les slots utilisant une deuxième loi de saut de fréquence LS_{2,} puis synchroniser le terminal sur cette deuxième loi de saut de fréquence LS₂ en écoutant lesdits slots,
- Le terminal A utilise un ou plusieurs slots d'un canal retour configuré selon la seconde loi de saut de fréquence pour émettre un signal d'identification, ledit signal d'identification est écouté par tous les hubs modems configurés pour recevoir sur les slots selon cette seconde loi de saut de fréquence,
- Le terminal A se met en écoute sur le canal commun défini par l'ensemble des hubs modems qui communiquent sur les slots identifiés selon cette même seconde loi de fréquence, pour se voir notifier par le hub modem élu, les paramètres d'allocation réseau, l'élection du hub étant réalisée de la manière suivante :
   • Chaque hub modem mesure le niveau de puissance du ou des signaux émis par un ou plusieurs terminaux du réseau satellitaire,
   • Chaque hub modem communique aux autres hubs modems les valeurs des puissances des signaux mesurés, et sélectionne la valeur de puissance maximale et le hub modem qui a reçu le signal correspondant,
- Le hub modem élu par les autres hubs modems notifie au terminal la ressource radio et la loi de saut de fréquence à utiliser.

Le terminal A qui souhaite s'attacher au réseau satellitaire identifie, par exemple, les slots pour lesquels l'ensemble des hubs modems est en écoute sur une même fréquence, afin de constituer un canal d'accès et de mesure, et le terminal utiliser ledit canal commun pour se synchroniser sur la première loi de fréquence.

Le procédé peut utiliser, en plus, une information de géolocalisation de type GPS pour se synchroniser.

Les hubs modems peuvent s'échanger les signaux reçus via un routeur commun à tous.

Les hubs modems peuvent aussi s'échanger les signaux reçus via un réseau externe R configuré pour dialoguer avec les routeurs de chaque hub modem.

Un message ou signal peut être codé avec la modulation à accès multiple par répartition de codes ou CDMA (Code Divisional Multiple Access) et le hub décode le signal en utilisant l'ensemble des codes CDMA attribués au réseau et estime la puissance du signal sur la base du taux de corrélation entre le signal reçu et le code CDMA.

L'invention concerne aussi un système pour l'entrée dans un réseau satellitaire d'un ou plusieurs terminaux mobiles A comprenant un satellite, plusieurs hubs modems installés dans une ou plusieurs stations hub caractérisé en ce que chaque hub modem est configuré pour exécuter les étapes de mesure de puissance, l'élection d'un hub en exécutant les étapes du procédé selon l'invention et ledit hub modem élu transmet au terminal une configuration pour l'entrée dans le réseau et son déplacement au sein dudit réseau.

Les hubs modems peuvent être disposés dans une même station hub, ladite station comprend un routeur permettant l'échange des signaux reçus par chacun des hubs modems et une horloge commune.

Les hubs modems sont, par exemple, disposés dans une même station hub, ladite station comprend un routeur permettant l'échange des signaux reçus par chacun des hubs modems et un moyen externe de synchronisation.

Les hubs modems peuvent être disposés dans des stations hubs distinctes, lesdites stations hubs étant connectées via un réseau R adapté.

D'autres caractéristiques et avantages de la présente invention apparaîtront mieux à la lecture de la description d'exemples de réalisation annexée des figures qui représentent :
- Figure 1, un exemple d'architecture du système selon l'invention
- Figure 2, un deuxième exemple d'architecture du système selon l'invention, et
- Figure 3, un exemple de trame.

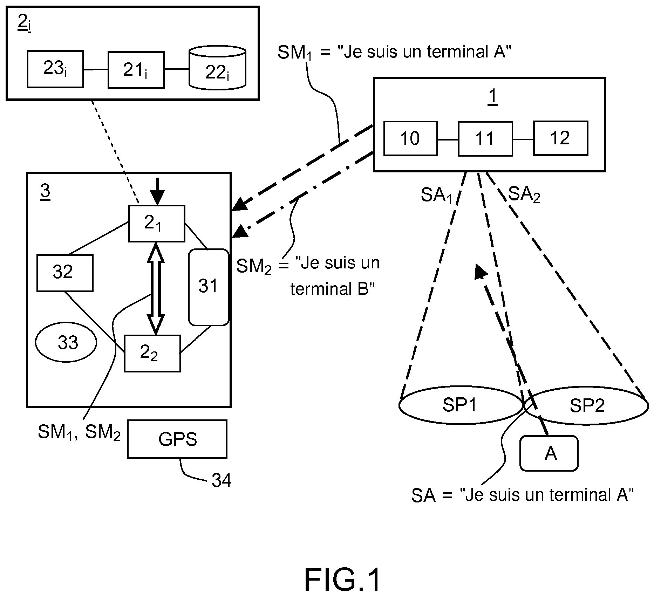

La figure 1 représente un exemple d'architecture du système selon l'invention comprenant un satellite 1, plusieurs hubs modems 2₁, 2₂, installés dans une station hub 3 ou hub, lesdits modems étant désignés comme hub modems, plusieurs stations terminales A, B, C, ou terminaux, seule la station A étant représentée sur la figure.

Un hub modem 2ᵢ (avec i=1, 2 sur la figure 1) comprend un processeur 21i configuré pour exécuter les étapes du procédé selon l'invention, une mémoire 22i permettant d'enregistrer les signaux reçus au niveau du hub modem pendant une durée d'un créneau temporel ou slot. Le hub modem 2ᵢ comprend un module de codage/décodage 23i du contenu des signaux.

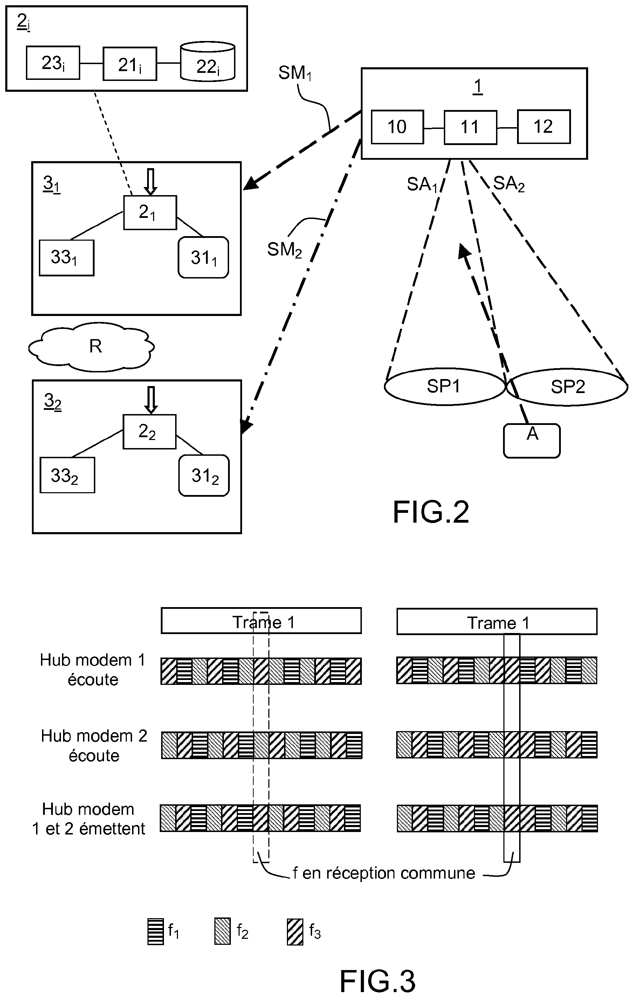

La station hub ou hub 3 comporte une chaîne de transmission radiofréquence RF comprenant un ensemble 31 constitué d'antennes, d'amplificateurs, de modules de transposition, connus de l'homme du métier. Elle comprend aussi un routeur 32 permettant l'échange des signaux et des messages entre les hubs modems, et une horloge 33 commune à l'ensemble des modems. L'horloge 33 a notamment pour fonction de synchroniser les hubs modems sur les frontières de trames et de slots. Un exemple de structure de trame est donné à la figure 3. Dans le cas où l'ensemble des spots n'est pas géré par le même hub modem, les hubs modems sont synchronisés par un moyen externe 34 de telle sorte que les différents spots - dont les réceptions sont gérées par des modems de différents hubs - écoutent tous selon au moins deux lois de saut de fréquence F₁, F₂, aux paliers de saut de fréquence indiqués. Le moyen de synchronisation externe est, par exemple, un système de géolocalisation de type GPS (Global Positioning System). On suppose que le satellite et ses spots ont une capacité d'écoute large bande de telle sorte que le satellite n'a pas besoin de connaître la ou les lois de saut de fréquence appliquées et connues des modems seuls.

Selon un mode de réalisation, le satellite est dit régénératif, c'est-à-dire qu'il démodule le signal reçu pour en corriger les erreurs et le remodule après. Un tel satellite aura besoin de connaître les deux lois de fréquence et de se synchroniser sur ces deux lois. Il doit aussi connaître la loi d'entrelacement temporel, c'est-à-dire, l'identification des slots pour lesquels la première loi s'applique et ceux pour lesquels la deuxième loi s'applique.

Le procédé se décline au niveau du terminal et au niveau du hub ou station hub.

Sur l'exemple donné à la figure 1, le message de demande d'entrée dans le réseau satellite et émis par le terminal A "I am terminal A" est entendu, par les deux spots SP₁, SP₂, du satellite. L'amplitude du signal atteignant les deux spots est identique, mais du fait des différences d'orientation de ces deux spots, le gain antennaire au niveau du satellite est différent. De ce fait, le même signal source se transforme par passage par les spots SP₁ et SP₂, en deux signaux SA₁ et SA₂ d'amplitudes différentes en entrée des étages de transposition 10, d'amplification 11 et de retransmission 12 du satellite 1 vers le hub. On suppose que ces étages réalisent un traitement identique pour tous les spots. Cette différence d'amplitude se retrouve dans les signaux modulés SM₁, SM₂ et transposés à destination des hubs modems traitants 2₁, 2₂ du hub 3.

Tant les modems du hub 3 que les terminaux partagent des données communes nécessaires à la mise en œuvre de l'invention et sont préconfigurés de manière cohérente, par exemple de la manière suivante:
- La durée d'une trame,
- Le nombre de trames dans un cycle, au bout duquel le numéro de trame est réinitialisé,
- Le nombre de slot/ trames, et de paliers par slot,
- Une première loi de saut de fréquence F₁, utilisée en émission et réception, et propre à chaque hub modem,
- Une deuxième loi de saut de fréquence F₂, utilisée en réception seule et commune à l'ensemble des hubs modems,
- Une identification d'un ou plusieurs slots par trame pour laquelle la seconde loi de saut de fréquence s'applique, la première loi de saut de fréquence s'appliquant à l'ensemble des autres slots.

Les slots pour lesquels la seconde loi de saut de fréquence s'applique ne sont pas nécessairement de la même durée que les autres slots.

Un identifiant Id(terminal) de terminal est unique dans le réseau. L'identifiant de terminal sera utilisé pour associer à un signal reçu au niveau du satellite et au niveau d'un hub modem, son terminal émetteur.

Lorsqu'un terminal A souhaite s'attacher au réseau, il doit au préalable être en mesure d'identifier les slots dans lesquels l'ensemble des hubs modems sera en écoute sur la même fréquence. L'ensemble de ces slots en accès forme alors le canal d'accès et de mesure commun à tous les spots.

Selon un mode de réalisation, le terminal ne dépend pas d'une synchronisation externe pour se synchroniser sur les lois de fréquence (type GPS) et utilise le canal commun à tous les spots pour se synchroniser sur la loi de saut de fréquence utilisée (première loi de fréquence) pour véhiculer le trafic émis par l'ensemble des hubs modems. Le terminal connaît la loi de saut de fréquences utilisée, par exemple LS₁={F₁, F₂, F₄, F₅}; LS₂= {F₁, F₃, F₂, F₅.}. Pour se synchroniser et connaissant la loi de saut de fréquence utilisée, le terminal attend l'avènement d'une des fréquences connues de la première loi de saut de fréquence. Le terminal ne sait pas initialement où il se trouve dans la séquence des fréquences, il connaît la loi de saut de fréquence du spot global. Connaissant la loi de fréquence utilisée, le terminal attend l'avènement d'une des fréquences connues et émet une hypothèse sur les fréquences suivantes qui seront utilisées par les hubs modems. Il fait l'hypothèse qu'il doit se trouver par exemple sur la fréquence F₁ de la première séquence et vérifie s'il retrouve la fréquence F₂ et les suivantes prédéfinies. Si cette hypothèse est fausse, le terminal, le terminal attend une autre occurrence de cette fréquence ou d'une autre fréquence prédéfinie et émet une nouvelle hypothèse. Il renouvelle cette procédure interne jusqu'à ce que l'hypothèse soit vérifiée, c'est-à-dire, que le terminal a reconnu la loi de saut de fréquence et sa position. Cette étape permet au terminal de se synchroniser sur une première loi de fréquence avant la détection des slots utilisant la deuxième loi de fréquence pour émettre.

Une fois cette synchronisation acquise, le terminal est en mesure de détecter les slots utilisant la deuxième loi de saut de fréquence F₂. Ces slots (utilisant la deuxième loi de fréquence) sont positionnés de manière prédéfinie par les hubs modems et leur position est également connue par configuration du terminal (au démarrage de l'application). Ces slots S(F₂) et cette deuxième loi de saut de fréquence F₂ forment le canal d'accès et de mesure en voie montante (terminal == > hub) et un canal de diffusion en voie descendante (hub == >terminal).

Selon une procédure identique à celle pour la synchronisation sur la première loi de saut de fréquence, le terminal se synchronise sur la deuxième loi de saut de fréquence. A la loi de saut de fréquence et aux slots du canal de diffusion sur lesquels le terminal se synchronise en réception, correspond une unique loi de saut de fréquence Fᵤ et un ensemble de slots S(Fᵤ), identiques ou non aux slots et à la loi de saut de fréquence utilisée par les hubs modems en réception et que le terminal peut utiliser en réception. C'est cette seconde loi de saut de fréquence que le terminal doit utiliser en émission sur les slots prédéterminés qui sont le pendant sur la voie retour des slots du canal de diffusion utilisés par les hubs modems à la voie allée.

A l'issue de ces étapes, on a défini un canal commun utilisable par le terminal en émission.

Lors d'un premier accès au réseau satellitaire, le terminal A se synchronise sur la trame en réception, puis détermine le top synchronisation de la trame utilisable en émission de paramètres de configuration et du top de synchronisation de la trame en réception, puis détermine les slots utilisables pour l'accès aléatoire en fonction des paramètres de configuration de la trame, du numéro de trame et d'un aléa. Il procède dans ce/ces slots à une émission vers le satellite selon la seconde loi de saut de fréquence, d'un signal contenant son identifiant. Ce signal est, par exemple, en fonction du mode de réalisation, soit un signal de type CDMA avec un code unique par terminal utilisé pour réaliser la fonction d'étalement de spectre, soit un signal court modulé en fonction du message contenant l'identifiant.

Le terminal se met alors en écoute sur le canal commun descendant pour se voir notifier par le hub modem qui aura été déterminé, pour traiter le terminal, une allocation initiale sous la forme d'une ressource radio et d'une loi de saut de fréquence. Cette procédure côté hub est décrite ci-après.

Si l'on se réfère à la figure 1, le terminal A émet un message de demande d'accès au réseau satellitaire « I am terminal A » vers le satellite. Le satellite amplifie au moyen de son amplificateur 10, transpose 11 et route le message grâce au module de retransmission 12. Le signal est ensuite transmis via la chaîne de transmission RF de la station hub vers le premier hub modem 2₁, et vers le deuxième hub modem 2₂. Le premier hub modem 2₁ transmet le message SM₁ qu'il a reçu vers le deuxième hub modem 2₂ avec un RSSI de -30dB par exemple, le deuxième hub modem transmet le message SM₂ qu'il a reçu avec un RSSI de -50 dB vers le premier hub modem. La transmission est effectuée via le routeur de la station hub 3 dans la configuration de la figure 1. Les hubs modems réalisent chacun de leur côté une mesure de puissance en réception du signal reçu, P(SM₁), P(SM₂) et se communiquent les résultats. Le hub modem qui aura reçu le signal de plus forte puissance sera désigné « élu » pour attacher le terminal. Le hub modem qui est choisi, notifie au terminal correspondant, les paramètres de configuration, par exemple la ressource et la loi de saut de fréquence que ce dernier doit utiliser. Chaque hub modem est configuré pour décider sur quel hub modem le terminal va se connecter et rentrer dans le réseau satellitaire. Les mesures de puissance de signal se font par cycle (intervalle de temps pour une même trame) afin de permettre au terminal de changer de hub modem une fois qu'il est entré dans le réseau satellitaire.

Après attachement au réseau satellitaire et en cours de trafic, le terminal reçoit, via une signalisation dédiée, la fréquence à laquelle il doit se signaler sur le canal d'accès et de mesure afin que le réseau de hubs modems procède à une mesure de puissance en réception (niveau de puissance du signal reçu) utilisée pour décider d'une procédure de changement de hub modem. La mesure de puissance du signal émis par le terminal pour demander son entrée dans le réseau « I am terminal » est effectuée selon une périodicité déterminée par le réseau, en fonction par exemple du trafic.

Une fois le terminal synchronisé, le procédé va rechercher le hub modem auquel le terminal va s'accrocher pour son entrée dans le réseau satellitaire. La procédure au niveau de chacun des hubs modems suit, par exemple, les étapes suivantes:
- Détermination du numéro de trame N(T) contenu dans le message reçu par un hub modem à partir de l'horloge interne du hub,
- Détermination du numéro slot/palier N(P) pour un hub modem à partir de l'horloge interne du hub,
- Si le slot P est un slot en réception pour laquelle la seconde loi de saut de fréquence s'applique, le hub modem enregistre l'ensemble des signaux émis par les différents terminaux qui utilisant le même slot pour la réception, qu'il reçoit pendant la durée de ce slot. Ces signaux sont stockés dans la mémoire du hub modem.

Quel que soit la configuration du réseau satellitaire, les hubs modems vont s'échanger les mesures de puissance qu'ils réalisent sur les signaux reçus, ce qui leur permettra d'identifier le signal de puissance la plus élevée, le terminal associé et, s'ils doivent se considérer comme hub modem de connexion pour le terminal.

Selon un premier mode de réalisation, le hub modem va sélectionner le signal de plus forte puissance qui a été mémorisé. La sélection s'effectue en comparant les puissances des différents signaux et en conservant le signal de plus forte puissance. Les hubs modems s'échangent les mesures de puissance de signaux qu'ils ont réalisées sur réception des signaux émis par différents terminaux qui émettent sur un même slot.

Puis le hub modem qui a détecté le signal de plus forte puissance décode le message contenu dans le signal S_{MP} de plus forte puissance et contenant l'identifiant du terminal émetteur de ce signal.

Si le hub modem qui a détecté le signal de plus fort puissance arrive à le décoder correctement, le hub modem reconstruit le signal tel qu'il arriverait s'il n'y avait pas d'interférences venant d'autres messages. Pour cela, connaissant le contenu du message initial et la modulation utilisée, le hub modem est capable de reconstruire le signal initial. D'autre part, le hub modem estime le niveau de puissance P(S_{MP}) reçue de ce signal (RSSI received signal strength indicator). Le hub modem soustrait le signal initial théorique Spₜₕₑ du signal reçu et mesuré S_{MP}. Il en déduit les signaux secondaires qui correspondent aux messages de moindre de puissance et ensuite identifie ces messages dits secondaires

Le hub modem procède à une estimation de l'amplitude des signaux secondaires, i.e., les signaux dont le niveau de puissance est inférieur à la valeur de la puissance maximum.

La figure 2 représente une variante d'architecture avec deux hubs modems traitant deux spots du satellite SP₁, SP₂. Dans ce cas, par rapport à l'architecture de la figure 1, chaque hub modem 2₁, 2₂ comprend sa propre chaîne RF, 31₁, 31₂, et un routeur 32₁, 32₂, et le système comprend un réseau R (connu de l'homme du métier) permettant l'échange des messages d'un hub modem à un autre. La mise en œuvre du procédé est identique à celle décrite précédemment pour le cas de l'architecture décrite à la figure 1.

Dans le cas d'un système utilisant le codage à accès multiple par répartition en code CDMA, le hub modem décode l'ensemble des messages par une démodulation CDMA. A chaque code CDMA utilisé pour la démodulation correspond un unique identifiant « Ident ». Le hub modem tente donc de décoder un message « ident » en utilisant l'ensemble des codes CDMA attribués dans le réseau.

Pour chaque modem correctement décodé, le hub modem estime la puissance du signal sur la base du taux de corrélation entre le signal reçu et le code CDMA.

Pour l'ensemble des terminaux dont le message « Ident » ne correspond pas à un terminal pris en charge par le hub modem, ce dernier construit un message M{(ldent,RSSI)} constitué d'une liste de paires contenant l'identifiant « Ident » de terminal et le RSSI sous lequel le hub modem reçoit ce signal ident. Ce message est diffusé périodiquement à l'ensemble des autres hubs modems du réseau, c'est-à-dire tant vers les hubs modems appartenant à la même station que les hubs modems d'autres hubs Satcom. Lorsqu'un hub modem reçoit ce message, il identifie dans la liste l'ensemble des terminaux pour lesquels il assure le traitement des communications. Pour chacun des terminaux de la liste, le hub modem trie cette liste en fonction du niveau de RSSI tel que perçu, par lui et par les hubs modems traitant les spots voisins. Si le terminal n'est pas vu par un hub voisin, il est indiqué avec un RSSI = 0 Le hub modem maintient un histogramme de la différence entre le RSSI qu'il mesure et le RSSI estimé par les hubs modems voisins. Cet histogramme de différence sert à déterminer la fréquence moyenne d'émission du signal Ident du terminal.

La figure 3 illustre un exemple de configuration d'une trame comprenant 14 slots de 10ms. Le hub Modem 2₁ écoute sur trois fréquences F₁, F₂, F₃, Le hub Modem 2₂ écoute sur les mêmes fréquences mais pour des slots différents, les deux hubs modems émettent sur les trois fréquences. Sc représente les slots de chaque trame pour laquelle la fréquence utilisée en réception est commune. Cette fréquence change à chaque trame en fonction d'une loi de saut de fréquence connue de l'ensemble des modems et de l'ensemble des terminaux.

L'invention offre une solution simple, les terminaux n'ayant pas à connaître la configuration des SATVLAN dans les différents spots. Elle offre la sécurité et la disponibilité, la configuration des SATVLAN utilisable sur la voie de retour n'est pas diffusée, ce qui élimine le risque d'interception de cette configuration et de son usage.

## Revendications

1. - Procédé pour configurer l'entrée d'au moins un terminal mobile A dans un réseau satellitaire comprenant un satellite (1) émettant sur plusieurs spots, les transmissions étant organisées sous la forme de trames et de slots découpés en paliers associés à des instants et des fréquences d'émission, un ensemble de hubs modems (2i) installés dans une ou plusieurs stations hub (3), chaque hub modem étant configuré pour échanger des signaux correspondant à un ou plusieurs spots avec le satellite et effectuer des mesures de puissance, les hubs modems étant reliés entre eux, les hubs modems étant associés à au moins trois lois de saut de fréquence parmi lesquelles une loi de saut de fréquence dite première loi de saut de fréquence LS₁ propre à chaque hub modem et donnant la fréquence associée aux paliers de slots de trafic, et une loi de saut de fréquence dite deuxième loi de saut de fréquence LS₂ donnant la fréquence associée aux paliers de slots d'un canal commun à l'ensemble des hubs modems, le procédé comportant au moins les étapes suivantes :
• Lors d'un premier accès, synchroniser le terminal A sur la première loi de saut fréquence LS₁, identifier la trame et les slots utilisant la deuxième loi de saut de fréquence LS_{2,} puis synchroniser le terminal sur cette deuxième loi de saut de fréquence LS₂ en écoutant lesdits slots,
• Le terminal A utilise un ou des slots dudit canal commun pour émettre un signal d'identification, ledit signal d'identification est écouté par tous les hubs modems configurés pour recevoir sur les slots selon cette seconde loi de saut de fréquence,
• Le terminal A se met en écoute sur ledit canal commun pour se voir notifier la ressource radio et la loi de saut de fréquence à utiliser par un hub modem déterminé comme étant le hub modem de connexion pour le terminal, la détermination du hub modem de connexion étant réalisée de la manière suivante :
• Chaque hub modem mesure le niveau de puissance du signal d'identification émis par le terminal A,
• Chaque hub modem communique aux autres hubs modems la valeur de puissance du signal d'identification mesurée,
∘ Le hub modem ayant la valeur de puissance maximale est considéré comme hub modem de connexion pour le terminal A.

2. - Procédé selon la revendication 1 caractérisé en que le terminal A qui souhaite s'attacher au réseau satellitaire identifie les slots pour lesquels l'ensemble des hubs modems est en écoute sur une même fréquence, afin de constituer un canal d'accès et de mesure, et le terminal utilise ledit canal commun pour se synchroniser sur la première loi de fréquence.

3. - Procédé selon la revendication 1 **caractérisé en ce qu'**il utilise en outre une information de géolocalisation de type GPS pour se synchroniser.

4. - Procédé selon l'une des revendications 1 à 3 **caractérisé en ce que** les hubs modems s'échangent les signaux reçus via un routeur (12) commun à tous.

5. - Procédé selon l'une des revendications 1 à 3 **caractérisé en ce que** les hubs modems s'échangent les signaux reçus via un réseau externe R configuré pour dialoguer avec les routeurs de chaque hub modem.

6. - Procédé selon la revendication 1 **caractérisé en ce qu'**un message ou signal est codé avec la modulation CDMA et **en ce que** le hub décode le signal en utilisant l'ensemble des codes CDMA attribués au réseau et estime la puissance du signal sur la base du taux de corrélation entre le signal reçu et le code CDMA.

7. - Système pour l'entrée dans un réseau satellitaire d'au moins un terminal mobile A comprenant un satellite (1) émettant sur plusieurs spots, les transmissions étant organisées sous la forme de trames et de slots découpés en paliers associés à des instants et des fréquences d'émission, plusieurs hubs modems (2i) installés dans une ou plusieurs stations hub (3), chaque hub modem étant configuré pour échanger des signaux correspondants à un ou plusieurs spots avec le satellite et effectuer des mesures de puissance, les hubs modems étant reliés entre eux, les hubs modems étant associés à au moins trois lois de saut de fréquence parmi lesquelles une loi de saut de fréquence dite première loi de saut de fréquence LS₁ propre à chaque hub modem et donnant la fréquence associée aux paliers de slots de trafic, et une loi de saut de fréquence dite deuxième loi de saut de fréquence LS₂ donnant la fréquence associée aux paliers de slots d'un canal commun à l'ensemble des hubs modems, le système étant **caractérisé en ce que** les équipements du système sont configurés pour mettre en œuvre les étapes du procédé selon l'une des revendications 1 à 6.

8. - Système selon la revendication 7 **caractérisé en ce que** lesdits hubs modems sont disposés dans une même station hub (3), ladite station comprend un routeur (12) permettant l'échange des signaux reçus par chacun des hubs modems et une horloge commune (33).

9. - Système selon la revendication 7 **caractérisé en ce que** lesdits hubs modems sont disposés dans une même station hub (3), ladite station comprend un routeur (12) permettant l'échange des signaux reçus par chacun des hubs modems et un moyen externe (34) de synchronisation.

10. - Système selon la revendication 7 **caractérisé en ce que** lesdits hubs modems sont disposés dans des stations hubs distinctes (3₁, 3₂), lesdites stations hubs étant connectées via un réseau R adapté.

## Patentansprüche

1. Verfahren zum Konfigurieren des Eintritts mindestens eines mobilen Endgeräts A in ein Satellitennetzwerk, das einen Satelliten (1), der auf mehrere Spots emittiert, umfasst, wobei die Übertragungen in der Form von Rahmen und Slots organisiert sind, die in Stufen aufgeteilt sind, die Emissionszeitpunkten und -frequenzen zugeordnet sind, wobei ein Satz von Modem-Hubs (2i) in einer oder mehreren Hub-Stationen (3) installiert ist, wobei jeder Modem-Hub dazu konfiguriert ist, Signale, die einem oder mehreren Spots entsprechen, mit dem Satelliten auszutauschen und Leistungsmessungen durchzuführen, wobei die Modem-Hubs miteinander verbunden sind, wobei den Modem-Hubs mindestens drei Frequenzsprunggesetze zugeordnet sind, darunter ein Frequenzsprunggesetz, das als erstes Frequenzsprunggesetz LS₁ bezeichnet wird, das jedem Modem-Hub zu eigen ist und die Frequenz vorgibt, die den Verkehrs-Slot-Stufenzugeordnet ist, und ein Frequenzsprunggesetz, das als zweites Frequenzsprunggesetz LS₂ bezeichnet wird, das die Frequenz vorgibt, die den Slot-Stufen eines Kanals, der allen Modem-Hubs gemeinsam ist, zugeordnet ist, wobei das Verfahren mindestens die folgenden Schritte umfasst:
• bei einem ersten Zugriff, Synchronisieren des Endgeräts A mit dem ersten Frequenzsprunggesetz LS₁, Identifizieren des Rahmens und der Slots unter Verwendung des zweiten Frequenzsprunggesetzes LS₂, dann Synchronisieren des Endgeräts mit diesem zweiten Frequenzsprunggesetz LS₂ unter Abhören der Slots,
• das Endgerät A verwendet einen oder mehrere Slots des gemeinsamen Kanals, um ein Identifikationssignal zu emittieren, wobei das Identifikationssignal von allen Modem-Hubs abgehört wird, die dazu konfiguriert sind, auf den Slots gemäß diesem zweiten Frequenzsprunggesetz zu empfangen,
• das Endgerät A stellt sich auf dem gemeinsamen Kanal auf Abhören, um sich die Funkressource und das zu verwendende Frequenzsprunggesetz bekanntgeben zu lassen, durch einen Modem-Hub, der als der Verbindungs-Modem-Hub für das Endgerät bestimmt wird, wobei die Bestimmung des Verbindungs-Modem-Hubs wie folgt realisiert wird:
• jeder Modem-Hub misst das Leistungsniveau des von dem Endgerät A emittierten Identifikationssignals,
• jeder Modem-Hub teilt den anderen Modem-Hubs den gemessenen Leistungswert des Identifikationssignals mit,
o der Modem-Hub, der den maximalen Leistungswert aufweist, wird als Verbindungs-Modem-Hub für das Endgerät A betrachtet.

2. Verfahren nach Anspruch 1, **dadurch gekennzeichnet, dass** das Endgerät A, das sich an das Satellitennetzwerk anschließen will, die Slots identifiziert, für die alle Modem-Hubs auf derselben Frequenz abhören, um einen Zugriffs- und Messkanal zu bilden, und das Endgerät den gemeinsamen Kanal verwendet, um sich mit dem ersten Frequenzgesetz zu synchronisieren.

3. Verfahren nach Anspruch 1, **dadurch gekennzeichnet, dass** es ferner eine Geolokalisierungsinformation vom Typ GPS zum Synchronisieren verwendet.

4. Verfahren nach einem der Ansprüche 1 bis 3, **dadurch gekennzeichnet, dass** die Modem-Hubs untereinander die Signale austauschen, die über einen allen gemeinsamen Router (12) empfangen werden.

5. Verfahren nach einem der Ansprüche 1 bis 3, **dadurch gekennzeichnet, dass** die Modem-Hubs untereinander die Signale austauschen, die über ein externes Netzwerk R empfangen werden, das zum Dialogieren mit den Routern jedes Modem-Hubs konfiguriert ist.

6. Verfahren nach Anspruch 1, **dadurch gekennzeichnet, dass** eine Meldung oder ein Signal mit der CDMA-Modulation codiert wird, und dass der Hub das Signal unter Verwendung sämtlicher CDMA-Codes, die dem Netzwerk zugewiesen sind, decodiert und die Leistung des Signals auf der Basis der Korrelationsrate zwischen dem empfangenen Signal und dem CDMA-Code schätzt.

7. Verfahren für den Eintritt in ein Satellitennetzwerk mindestens eines mobilen Endgeräts A, das einen Satelliten (1) umfasst, der auf mehrere Spots emittiert, wobei die Übertragungen in der Form von Rahmen und Slots organisiert sind, die in Stufen aufgeteilt sind, die Emissionszeitpunkten und -frequenzen zugeordnet sind, wobei mehrere Modem-Hubs (2i) in einer oder mehreren Hub-Stationen (3) installiert sind, wobei jeder Modem-Hub dazu konfiguriert ist, Signale, die einem oder mehreren Spots entsprechen, mit dem Satelliten auszutauschen und Leistungsmessungen durchzuführen, wobei die Modem-Hubs miteinander verbunden sind, wobei den Modem-Hubs mindestens drei Frequenzsprunggesetze zugeordnet sind, darunter ein Frequenzsprunggesetz, das als erstes Frequenzsprunggesetz LS₁ bezeichnet wird, das jedem Modem-Hub zu eigen ist und die Frequenz vorgibt, die den Verkehrs-Slot-Stufen zugeordnet ist, , und ein Frequenzsprunggesetz, das als zweites Frequenzsprunggesetz LS₂ bezeichnet wird, das die Frequenz vorgibt, die den Slot-Stufen eines Kanals, der allen Modem-Hubs gemeinsam ist, zugeordnet ist, wobei das System **dadurch gekennzeichnet ist, dass** die Ausrüstungen des Systems dazu konfiguriert sind, die Schritte des Verfahrens nach einem der Ansprüche 1 bis 6 umzusetzen.

8. System nach Anspruch 7, **dadurch gekennzeichnet, dass** die Modem-Hubs in derselben Hub-Station (3) angeordnet sind, wobei die Station einen Router (12), der den Austausch der von jedem der Modem-Hubs empfangenen Signale erlaubt, und einen gemeinsamen Taktgeber (33) umfasst.

9. System nach Anspruch 7, **dadurch gekennzeichnet, dass** die Modem-Hubs in derselben Hub-Station (3) angeordnet sind, wobei die Station einen Router (12), der den Austausch der durch jeden der Modem-Hubs empfangenen Signale erlaubt, und ein externes Mittel (34) zur Synchronisation umfasst.

10. System nach Anspruch 7, **dadurch gekennzeichnet, dass** die Modem-Hubs in getrennten Hub-Stationen (3₁, 3₂) angeordnet sind, wobei die Hub-Stationen über ein geeignetes Netzwerk R verbunden sind.

## Claims

1. A method for configuring the input of at least one mobile terminal A in a satellite network comprising a satellite (1) which transmits over several spots, the transmissions being organised in the form of frames and slots which are cut up into levels which are associated with times and frequencies of transmission, a set of modem hubs (2i) being installed in one or more hub stations (3), each modem hub being configured to exchange signals corresponding to one or more spots with the satellite and to carry out power measurements, the modem hubs being connected with each other, the modem hubs being associated with at least three frequency hopping laws among which one frequency hopping law which is referred to as the first frequency hopping law LS₁ which is specific to each modem hub and which gives the frequency associated with the traffic slot levels, and one frequency hopping law which is referred to as the second frequency hopping law LS₂ which gives the frequency associated with the slot levels of a channel which is common to all of the modem hubs, the method comprising at least the following steps:
• during a first access, synchronising the terminal A to the first frequency hopping law LS₁, identifying the frame and the slots which use the second frequency hopping law LS₂, then synchronising the terminal to this second frequency hopping law LS₂ whilst listening to the slots,
• the terminal A uses one or more slots of the common channel to transmit an identification signal, said identification signal is heard by all the modem hubs which are configured to receive on the slots according to this second frequency hopping law,
• the terminal A begins listening on said common channel to be notified of the radio resource and the frequency hopping law to be used by a modem hub which is determined to be the connection modem hub for the terminal, the determination of the connection modem hub being carried out in the following manner:
• each modem hub measures the power level of the identification signal transmitted by the terminal A,
• each modem hub communicates to the other modem hubs the measured power value of the identification signal,
∘ the modem hub having the maximum power value is considered to be the connection modem hub for the terminal A.

2. The method according to claim 1, **characterised in that** the terminal A which wishes to become attached to the satellite network identifies the slots for which all the modem hubs are listening at the same frequency in order to constitute an access and measurement channel, and the terminal uses said common channel to synchronise to the first frequency law.

3. The method according to claim 1, **characterised in that** it further uses a geolocation information item of the GPS type in order to be synchronised.

4. The method according to any one of claims 1 to 3, **characterised in that** the modem hubs exchange the signals received via a router (12) which is common to all.

5. The method according to any one of claims 1 to 3, **characterised in that** the modem hubs exchange the signals received via an external network R which is configured to interact with the routers of each modem hub.

6. The method according to claim 1, **characterised in that** a message or signal is encoded with the CDMA modulation and **in that** hub decodes the signal using all of the CDMA codes attributed to the network and estimates the power of the signal on the basis of the rate of correlation between the signal received and the CDMA code.

7. A system for input into a satellite network of at least one mobile terminal A comprising a satellite (1) which transmits over several spots, the transmissions being organised in the form of frames and slots which are cut up into levels which are associated with times and frequencies of transmission, several modem hubs (2i) being installed in one or more hub stations (3), each modem hub being configured to exchange signals corresponding to one or more spots with the satellite and to carry out power measurements, the modem hubs being connected with each other, the modem hubs being associated with at least three frequency hopping laws among which one frequency hopping law which is referred to as the first frequency hopping law LS₁ which is specific to each modem hub and which gives the frequency associated with the traffic slot levels, and one frequency hopping law which is referred to as the second frequency hopping law LS₂ which gives the frequency associated with the slot levels of a channel which is common to all of the modem hubs, the system being **characterised in that** the equipment items of the system are configured to implement the steps of the method according to any one of claims 1 to 6.

8. The system according to claim 7, **characterised in that** the modem hubs are arranged in the same hub station (3), the station comprises a router (12) which enables the exchange of the signals received by each of the modem hubs and a common clock (33).

9. The system according to claim 7, **characterised in that** the modem hubs are arranged in the same hub station (3), said station comprises a router (12) which enables the exchange of the signals received by each of the modem hubs and an external synchronisation means (34).

10. The system according to claim 7, **characterised in that** the modem hubs are arranged in different hub stations (3₁, 3₂), said hub stations being connected via a suitable network R.
